# EUROPÄISCHE PATENTSCHRIFT

(11) **EP 3 160 798 B1**
(45) Veröffentlichungstag und Bekanntmachung des Hinweises auf die Patenterteilung: **02.12.2020**
(21) Anmeldenummer: 15734606.5
(22) Anmeldetag: 26.06.2015
(51) Int. Cl.: B60Q 1/26, B60Q 1/46, B60Q 1/50, B60K 35/00

(54) **FLEXIBLES ANZEIGESYSTEM SOWIE ANZEIGEVERFAHREN HIERFÜR**
FLEXIBLE DISPLAY SYSTEM AND DISPLAY METHOD THEREFOR
SYSTÈME D'AFFICHAGE FLEXIBLE ET PROCÉDÉ D'AFFICHAGE ASSOCIÉ

(30) Priorität: 26.06.2014 DE 102014109032
(43) Veröffentlichungstag der Anmeldung: 03.05.2017
(73) Patentinhaber: Huf Hülsbeck & Fürst GmbH & Co. KG, 42551 Velbert (DE)
(72) Erfinder: BUSCHMANN, Gerd, 42553 Velbert (DE)
(74) Vertreter: Bals, Rüdiger
(86) Internationale Anmeldenummer: PCT/EP2015/064593
(87) Internationale Veröffentlichungsnummer: WO 2015/197851

(56) Entgegenhaltungen:
- WO-A1-2010/037766
- WO-A1-2010/037766
- WO-A1-2010/037766
- CN-U- 202 188 416
- CN-U- 202 188 416
- CN-U- 202 188 416
- DE-A1-102006 019 284
- DE-A1-102006 019 284
- US-A1- 2005 099 287
- US-A1- 2005 099 287
- US-A1- 2005 099 287
- US-A1- 2012 256 543
- US-A1- 2012 256 543
- US-A1- 2012 256 543

## Beschreibung

Die vorliegende Erfindung ist auf ein System zum Anzeigen einer Funktion bei einem Kraftfahrzeug gemäß dem Oberbegriff von Anspruch 1 gerichtet. Dabei weist das System eine Anzeige auf, die mit mehreren ansteuerbaren Anzeigeelementen ausgestattet ist und eine Steuereinheit, die zur Ansteuerung der Anzeige dient sowie ein Starterelement, womit zumindest eine Ansteuerung der Anzeige startbar ist. Des Weiteren ist die vorliegende Erfindung auch auf ein Verfahren zum Anzeigen einer Funktion bei einem Kraftfahrzeug nach dem Oberbegriff von Anspruch 14 gerichtet.

Aus dem Stand der Technik sind zahlreiche Anzeigesysteme, insbesondere für Fahrzeuge bekannt (siehe zum Beispiel US 2012/256543 A1, US 2005/099287 A1, WO 2010/037766 A1, CN 202 188 416 U oder DE 10 2006 019284 A1). Dabei wird generell zwischen fahrzeuginternen und fahrzeugexternen Anzeigesystemen unterschieden. Gerade die fahrzeuginternen Anzeigesysteme dienen dazu, dem Fahrer oder Bediener des Fahrzeugs die Informationen in lesbarer Weise, z. B. durch Schrift oder Zahlen sowie Zeichen anzuzeigen. Bei den fahrzeugexternen Anzeigesystemen findet in der Regel eine einfach Beleuchtung eines Tastfeldes eines Schalters oder dergleichen statt. Weitergehende Informationen, wie z. B. wie lange die Beleuchtung eingeschaltet bleibt oder das Tastfeld, werden jedoch nicht durch die Anzeigesysteme den entsprechenden Bedienern vermittelt. So ist es gängige Praxis im Stand der Technik, dass sich die fahrzeugexternen Anzeigesysteme irgendwann abschalten, ohne dass jedoch der Benutzer dieses erkennen kann.

Aufgabe der vorliegenden Erfindung ist es somit ein Anzeigesystem sowie ein Verfahren zum Anzeigen einer Funktion bei einem Kraftfahrzeug bereitzustellen, bei dem zumindest ein Nachteil aus dem Stand der Technik überwunden wird. Insbesondere ist es eine Aufgabe der vorliegenden Erfindung, die Bedienbarkeit des Fahrzeugs zu verbessern. Vorzugsweise soll auch die Sicherheit des Fahrzeugs durch Vermeidung von Fehlbedienungen verbessert werden.

Die vorliegende Aufgabe wird durch ein System zum Anzeigen einer Funktion bei einem Kraftfahrzeug mit den Merkmalen des Anspruchs 1, insbesondere aus dem kennzeichnenden Teil, gelöst. Ebenfalls wird zur Lösung der Aufgabe ein Verfahren zum Anzeigen einer Funktion bei einem Kraftfahrzeug mit den Merkmalen des Anspruchs 14, insbesondere aus dem kennzeichnenden Teil vorgeschlagen. Dabei kann das erfindungsgemäße System zum Anzeigen der Funktion, kurz auch Anzeigesystem genannt, zur Durchführung des erfindungsgemäßen Verfahrens dienen. In den abhängigen Vorrichtung- und Verfahrensansprüchen sind bevorzugte Weiterbildungen der Erfindung aufgeführt. Merkmale, die zum erfindungsgemäßen Anzeigesystem offenbart werden, gelten dabei auch für das erfindungsgemäße Verfahren und umgekehrt.

Erfindungsgemäß ist bei dem System zum Anzeigen einer Funktion bei einem Fahrzeug vorgesehen, dass die Steuereinheit zunächst ein Verfahrensablauf zur Ansteuerung der Anzeige aufweist, wobei der Verfahrensablauf durch das Startelement startbar ist. Durch den Verfahrensablauf, der zur Ansteuerung der Anzeige dient, kann die Anzeige dem Bediener des Fahrzeugs zusätzliche Informationen sichtbar machen. Dabei erzeugt der Verfahrensablauf auch einen Anzeigeverlauf in der Anzeige, so dass diese nicht nur ein- und ausschaltbar oder hell und dunkel leuchten kann, sondern auch auf- und abbauende Lichtsignale und dergleichen erzeugt. Dabei kann die Anzeige insbesondere einen dynamischen Anzeigeverlauf sichtbar machen, der eine intuitive Bedienung ermöglicht. Der dynamische Anzeigeverlauf kann durch einzelne oder mehrere separat ansteuerbare Anzeigeelemente der Anzeige sichtbar gemacht werden.

Das erfindungsgemäße System kann beispielsweise dabei als reines Anzeigesystem dienen oder auch als Steuersystem, um z. B. eine fahrzeugseitige Funktion auslösen zu können. Zu diesem Zweck kann zumindest ein Startelement des Systems als Sensorelement, Schalter, Taster, Timer oder Logikbaustein ausgestaltet sein, um die Steuereinheit anzutriggern. Hierdurch kann der Anzeigeverlauf, der insbesondere als Verfahrensablauf in der Steuereinheit speicherbar ist, gestartet werden. So ist es denkbar, dass die Anzeige zumindest geometrisch als Leuchtband, Leuchtpfeil, Leuchtpunkt, Leuchtring oder Leuchtumrandung ausgestaltet ist, wobei insbesondere die Anzeige durch die geometrische Anordnung der Anzeigeelemente gebildet ist. Diese Anzeige kann um ein Emblem vom Fahrzeug angeordnet sein und/oder dieses Emblem integrieren. Durch ein weiteres Startelement kann eine zusätzliche Funktion bei dem erfindungsgemäßen System ausgelöst werden.

Die zuvor erwähnten Startelemente können dabei in dem erfindungsgemäßen System integriert sind, insbesondere in der Steuereinheit oder der Anzeige oder als externes Element am Fahrzeug angeordnet sein.

Ferner ist es denkbar, dass die Steuereinheit des erfindungsgemäßen Systems durch die fahrzeugseitige Elektronik oder aber durch ein Smartphone oder einen Computer vom Benutzer frei programmierbar ist, um somit den Verfahrensablauf und den damit verbundenen Anzeigeverlauf der Anzeige frei wählbar programmieren zu können. Hierfür kann das erfindungsgemäße System mit einer Standarddatenschnittstelle, wie z. B. Bluetooth, NFC, Canbus, LAN, oder WLAN ausgestattet sein. Hierdurch lässt sich das erfindungsgemäße System individuell auf die Bedürfnisse des Bedieners einstellen. Zu diesem Zweck ist das erfindungsgemäße System mit einem nicht flüchtigen Speicher ausgestattet, der in der Steuereinheit integriert sein kann.

Des Weiteren kann ein erstes Startelement als Näherungssensor ausgestaltet sein, um die Annäherung einer Person an das Fahrzeug messtechnisch erfassen zu können. Das dadurch erhaltene Signal kann an die Steuereinheit des erfindungsgemäßen Systems und/oder an die fahrzeugseitige Elektronik weitergeleitet werden, wodurch z. B. ein Wecksignal per Funk an einen externen ID-Geber geschickt werden kann. Dieses Wecksignal dient dazu, dass der ID-Geber sich gegenüber der fahrzeugseitigen Elektronik identifiziert und bei einer positiven Identifizierung durch einen entsprechenden Zugangscode ein Zugangskontrollsystem des Fahrzeugs entriegelt wird.

Ferner kann ein zweites Startelement eine bewusste Handlung der Person erfassen, die sich zuvor dem Fahrzeug genähert hat, um z. B. ein berührungsloses Öffnen einer Tür, Heckklappe oder dergleichen auszulösen. So kann bspw. ein virtueller Fußkick genutzt werden, um die Heckklappe bei einem Fahrzeug zu öffnen. Oder ein mit der Hand entlang streichen an der Anzeige kann ebenfalls als virtuelles Betätigen eines Schalters durch das zweite Sensorelement messtechnisch erfasst werden, wodurch ebenfalls eine Funktion am Fahrzeug, insbesondere das Öffnen einer Tür oder einer Heckklappe erreichbar ist, wenn zuvor die positive Identifizierung eines ID-Gebers bei dem Zugangskontrollsystem stattgefunden hat.

Gerade das zweite Startelement kann als berührungsloses Sensorelement ausgestaltet sein. Hierbei kann es sich z. B. um einen kapazitiven Sensor oder einen optischen Sensor oder einen Ultraschallsensor handeln. Dieses Sensorelement erfasst dann eine bewusste Bewegung oder Gestik der Person messtechnisch, wodurch dann eine fahrzeugseitige Funktion auslösbar ist. Hierbei kann es sich z. B. um das Öffnungs- und/oder Schließsignal für eine Tür oder Klappe handeln oder um das Ein- und/oder Ausschalten einer Fahrzeugbeleuchtung oder einer Alarmanlage oder dergleichen.

Damit der Bediener jedoch zumindest weiß, wann, wo, wie und wie lange er welche Gestik oder virtuelle Betätigung durchführen muss, um die fahrzeugseitige Funktion auszulösen, wird dieses optisch durch das erfindungsgemäße System, insbesondere den Anzeigeverlauf der Anzeige, angezeigt.

Solange von dem erfindungsgemäßen System keine Annäherung an das Fahrzeug durch das erste Startelement messtechnisch erfassbar ist, kann die Anzeige ausgeschaltet bleiben. In diesem Fall ist das System quasi im Stand-By-Betrieb. Sobald jedoch das erfindungsgemäße System durch das erste Startelement eine Annäherung einer Person an das Fahrzeug messtechnisch erfasst, kann bspw. der bereits beschriebene Weckvorgang des externen ID-Gebers stattfinden. Dieser Vorgang kann bspw. durch die Anzeigevorrichtung bereits sichtbar gemacht werden, indem z. B. die Anzeige, insbesondere die jeweiligen Anzeigeelemente, solange blinkt oder in einer vordefinierten Farbe leuchtet bis eine positive Identifizierung des ID-Gebers stattgefunden hat oder nach einer Zeitspanne die Anzeige abgeschaltet wird, da eben keine positive Identifizierung des ID-Gebers stattgefunden hat. Bei diesem Vorgang kann die Anzeige z. B. ihre Farbe ändern, um dem Bediener anzuzeigen, dass eine Zeitspanne zur Auflösung einer weiteren Funktion in Kürze ablaufen wird. Auch ist es denkbar, dass in Abhängigkeit der Zeit einzelne Anzeigeelemente der Anzeige aufleuchten, um dem Bediener das Ablaufen der Zeitspanne sichtbar zu machen.

Bei einer positiven Identifizierung des ID-Gebers kann dann die Anzeige z. B. vom Blinken oder der Farbveränderung in einen kontinuierlichen Anzeigemodus oder in eine einheitliche, vordefinierte Farbe (Grün oder Rot) wechseln. Damit wird dem Bediener angezeigt, dass nunmehr das erfindungsgemäße System zur Erfassung eines weiteren Signals bereit ist, welches vorzugsweise durch das erste oder ein weiteres zweites Startelement erfasst werden kann. Hierbei kann z. B. dem Bediener eine Streifrichtung oder Schwenkrichtung durch die Anzeige, insbesondere die jeweiligen Anzeigeelemente, angezeigt werden, entlang derer der Benutzer seine Hand entlang bewegen muss, um eine fahrzeugseitige Funktion auslösen zu können. Auch kann durch die Anzeige die Bewegungsgeschwindigkeit für den Benutzer angezeigt werden, die er einhalten muss, um die fahrzeugseitige Funktion auszulösen. Außerdem kann durch die Anzeige dem Benutzer auch angezeigt werden, bis wann er seine Handlung auszuüben hat, um die fahrzeugseitige Funktion auslösen zu können. So kann z. B. die Farbe der Anzeige langsam von Grün in Rot übergehen, wobei die Farbe Rot dann signalisiert, dass die Zeit zur Auslösung der fahrzeugseitigen Funktion abläuft. Auch ist es denkbar, dass die Anzeige wie ein Leuchtvorhang aufgeht oder zugeht, was durch die Ansteuerung von einzelnen Anzeigeelementen in der Anzeige realisierbar ist.

Vorzugsweise kann hierfür die Anzeige als Leuchtband oder Leuchtstreifen ausgestaltet sein.

Allerdings sei an dieser Stelle auch erwähnt, dass die Anzeige auch als Leuchtpfeil, Leuchtpunkt, Leuchtring oder Leuchtumrandung ausgestaltet sein kann. Hierbei kann die geometrische Anordnung durch die einzelnen Anzeigeelemente gebildet werden. Auch ist es denkbar, dass die Anzeige in oder um ein Emblem des Fahrzeugs angeordnet ist, so dass z. B. das Emblem umrandet oder von innen heraus durch die Anzeige beleuchtbar ist. Bei einem z. B. kreisrunden Emblem könnte dann die Anzeige auch als Leuchtring um das Emblem angeordnet sein. In diesem Fall könnten z. B. die oberen Anzeigeelemente langsam ihre Farbe wechseln, wobei nach und nach die benachbarten unteren Anzeigeelemente ebenfalls die Farbe der oberen Anzeigeelemente annehmen. Damit kann z. B. dem Bediener des Fahrzeugs angezeigt werden, dass er solange seine Handlung zur Auslösung der fahrzeugseitigen Funktion vornehmen kann, bis auch die untersten Anzeigeelemente ihre Farbe gewechselt haben. Auch kann durch den Farbwechsel von oben nach unten, dem Bediener angezeigt werden, dass er z. B. von oben nach unten mit seiner Hand entlang des Emblems streifen muss, um die fahrzeugseitige Funktion auszulösen.

Bei einem Leuchtband als Anzeige kann dieses z. B. von der Mitte aus nach außen mit einem Farbwechsel oder einem Helligkeitswechsel der einzelnen Anzeigeelemente eine Bewegungsrichtung, Bewegungsgeschwindigkeit oder eine Zeitdauer für eine bewusste Handlung des Bedieners angezeigt werden, um die fahrzeugseitige Funktion auszulösen. Sollte der Bediener dabei z. B. seine Handlung falsch, zu schnell oder zu spät vornehmen, so könnte die Anzeigevorrichtung ihm dieses durch ein Blinken oder ein akustisches Signal eines Lautsprechers sichtbar und/oder hörbar anzeigen.

Dadurch, dass das erfindungsgemäße System dem Bediener durch die Anzeige zusätzliche Informationen bereitstellt, kann eine Fehlbedienung zuverlässig vermieden werden. Muss z. B. der Bediener einen virtuellen Fußkick ausüben, welcher von einem zweiten Sensorelement, welches nicht in der Anzeige integriert ist, sondern als externes Modul ausgestaltet sein kann, ausüben, so kann dem Benutzer durch die Anzeige angezeigt werden, wie lange er dafür Zeit hat. Hierzu kann sich z. B. ein virtueller Vorhang bei einem Lichtband von der Mitte hin aufbauen, indem die einzelnen Anzeigeelemente von der Mitte aus nach außen hin entsprechend angesteuert werden. Erreicht dabei der virtuelle Vorhang seine maximale Öffnung, bzw. den Rand des Lichtbandes, so ist die erforderliche Betätigungszeit abgelaufen. Nach dieser Zeit kann selbst ein messtechnischer richtig erfasster Fußkick nicht mehr zum Auslösen der fahrzeugseitigen Funktion führen. Hierdurch können Fehlbedienungen vermieden werden, wenn z. B. anstelle eines Fußkicks eine Katze den Messbereich des entsprechenden Sensorelements entlang streicht und damit das entsprechende Messsignal erzeugt.

Um eine Überhitzung des Systems, insbesondere der Anzeige zu vermeiden, kann insbesondere hinter der Anzeige zumindest ein Kühlkörper angeordnet sein, um eine Wärmeabfuhr zu verbessern.

Des Weiteren ist es denkbar, dass die Anzeige auch als Bremslicht ausgestaltbar ist. Hierbei kann somit die Anzeige selbst auch das Bremslicht bilden oder aber die Anzeige ist um ein Bremslicht selber angeordnet oder darin integriert. Somit lässt sich das erfindungsgemäß System wohlgefällig in einer bereits vorhandenen Lichtanlage eines Fahrzeugs integrieren.

Um den Energiebedarf des erfindungsgemäßen Systems so gering wie möglich zu halten, kann es vorgesehen sein, dass die Anzeigeelemente als insbesondere mehrfarbige LEDs oder OLEDs ausgestaltet sind. Auch ist es denkbar, dass die Anzeigeelemente zumindest Licht unterschiedlicher Farbfrequenzen, Intensität oder Helligkeit ausstrahlen, wobei insbesondere ein Anzeigeelement zumindest Licht unterschiedlicher Farbfrequenz, Intensität oder Helligkeit ausstrahlen kann. Durch eine Anzeige mit derartigen Anzeigeelementen lassen sich vielfältige Lichteffekte und Anzeigeverfahren realisieren. Durch die vorhandene Steuereinheit ist es ferner möglich, das System kundenindividuell programmieren und ausgestalten zu können. Dabei geht die Variabilität des Systems soweit, dass der Nutzer des Fahrzeugs einen eigenen Anzeigeverlauf programmieren kann. Auch ist es denkbar, dass für einzelne Fahrzeughersteller bereits ein vordefinierter Verfahrensablauf bzw. Anzeigeablauf in der Steuereinheit hinterlegt ist.

Um eine kontaktlose Kommunikation mit dem erfindungsgemäßen System zu ermöglichen, kann eine Antenne für diese Kommunikation mit einem externen ID-Geber vorhanden sein, wodurch z. B. ein funkloses Entriegeln oder Verschließen eines Sicherheitssystems vom Fahrzeug ermöglicht wird. Dieses Ver- oder Entriegeln wird auch im Rahmen der Erfindung als fahrzeugseitige Funktion angesehen.

Des Weiteren ist es denkbar, dass das erfindungsgemäße System auch zumindest einen Lautsprecher aufweist, um ein akustisches Signal zusätzlich oder optional zur Anzeige für einen Bediener übermitteln zu können.

Zusätzlich kann bei einem positiven Erfassen des Signals zur Auslösung der fahrzeugseitigen Funktion auch dieses über die Anzeige dem Bediener angezeigt werden, indem z. B. der Leuchtvorhang direkt geschlossen wird, worunter verstanden wird, dass er nicht weiter geöffnet wird, um die verbleibende Bediendauer anzuzeigen, wodurch dem Bediener angezeigt wird, dass seine Handlung richtig erfasst wurde und die fahrzeugseitige Funktion ausgelöst wird. Der virtuelle Leuchtvorhang kann durch eine Änderung der Helligkeit, der Farbe, durch Blinken einzelner Anzeigeelemente oder dergleichen auf der Anzeige des erfindungsgemäßen Systems dargestellt werden. Dabei muss die Anzeige nicht als Leuchtband ausgestaltet sein, sondern kann auch als Leuchtpfeil, Leuchtpunkt, Leuchtring oder Leuchtumrandung oder dergleichen vorgesehen sein.

Ferner ist die vorliegende Erfindung auch auf ein erfindungsgemäßes Verfahren zum Anzeigen einer Funktion bei einem Kraftfahrzeug gemäß des Anspruchs 14 gerichtet.

Ebenfalls ist die Erfindung auch auf ein Fahrzeug mit dem erfindungsgemäßen System gerichtet, bei dem auch das erfindungsgemäße Verfahren zum Einsatz kommen kann.

Weitere Maßnahmen und Vorteile der vorliegenden Erfindung ergeben sich aus den Ansprüchen, der nachfolgenden Beschreibung und den Zeichnungen. Ebenfalls gelten die offenbarten Merkmale aus dem erfindungsgemäßen System auch für das erfindungsgemäße Verfahren und umgekehrt. In den Zeichnungen ist die Erfindung in unterschiedlichen Ausführungsbeispielen dargestellt. Dabei können die in den Ansprüchen und in der Beschreibung erwähnten Merkmale jeweils einzeln für sich oder in beliebiger Kombination realisiert werden. Es zeigen:
- Figur 1: eine Draufsicht auf ein erfindungsgemäßes System mit einer Anzeige als Leuchtring um ein Emblem,
- Figur 2: eine Draufsicht auf ein weiteres erfindungsgemäßes System, bei dem die Anzeige als Leuchtband ausgestaltet ist,
- Figur 3: eine Rückansicht eines Fahrzeugs mit einem integrierten erfindungsgemäßen System und einem zweiten Sensorelement zur Erfassung einer virtuellen Betätigung einer Person,
- Figur 4: ein Ablaufdiagramm für das erfindungsgemäß Verfahren und
- Figur 5: ein zeitliches Ablaufdiagramm für das erfindungsgemäße Verfahren für die Fälle A. bis C.

In den nachfolgenden Figuren werden wir die gleichen technischen Merkmale auch von unterschiedlichen Ausführungsbeispielen die identischen Bezugszeichen verwendet.

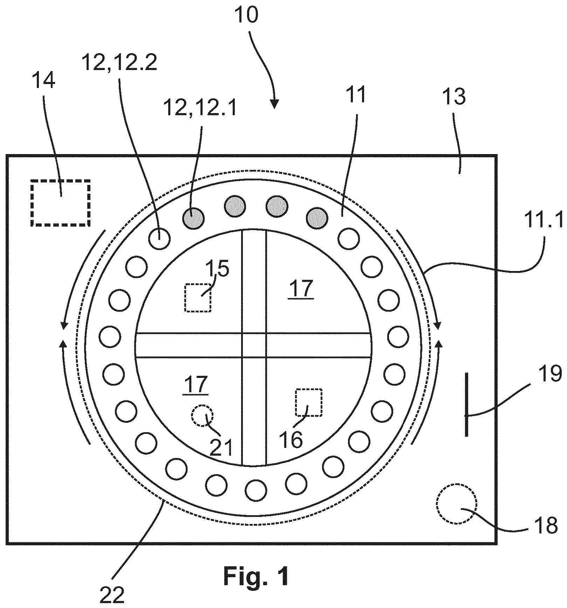

In der Figur 1 ist ein Anzeigeelement 12 des erfindungsgemäßen Systems 10 als Leuchtring um ein Fahrzeugemblem 17 realisiert. Einzelne Anzeigeelemente 12 sind in der Anzeige 11 sichtbar, wobei eine Laufrichtung 11.1 als Anzeige des Verlaufs der Anzeigeelemente 12 durch die roten Anzeigeelemente 12.1 und die grünen Anzeigeelemente 12.2 angedeutet sind.

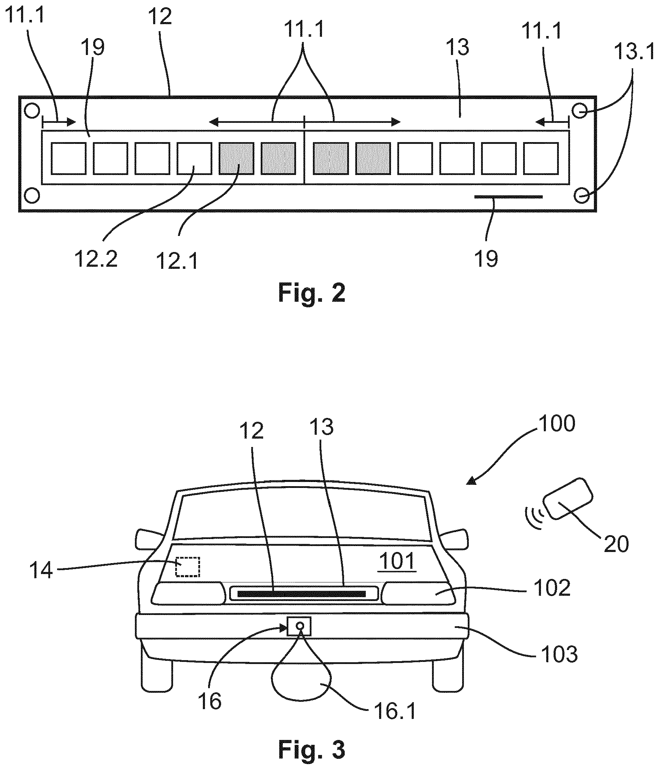

In der Figur 2 ist die Anzeige 11 als Leuchtband dargestellt, wobei die Anzeige 11 ein eigenständiges Modul darstellt, welches in einem Gehäuse 3 geschützt, insbesondere wasserdicht angeordnet ist. Diese Anzeige 11 wird über Befestigungselemente 13.1 an einem Fahrzeug 100 befestigt.

In den Figuren 1 und 2 ist das erfindungsgemäße System 10 in zwei unterschiedlichen Ausführungsbeispielen, nämlich als Leuchtring (s. Fig. 1) und als Lichtband (s. Fig. 2) dargestellt, wobei jedoch einzelne technische Merkmale mit den gleichen Funktionen sehr wohl vorhanden sein können und auch zumindest teilweise oder auch vollständig vorhanden sind. So ist z. B. bei dem erfindungsgemäßen System aus Figur 1 auch ein Lautsprecher 18 vorhanden, um auch ein Audiosignal an einen Bediener ausgeben zu können. Des Weiteren ist zumindest eine Antenne 19 vorgesehen, die zu einer funklosen Kommunikationsverbindung mit einem externen Gerät, wie z. B. einem ID-Geber 20 genutzt werden kann. Die bereits erwähnte Steuereinheit 14 kann hinter der Anzeige 12 oder in einem Gehäuse 13 für das System 10 angeordnet sein. In der Steuereinheit 14 ist der Verfahrensablauf hinterlegbar. Um unterschiedliche Farbfrequenzen, Intensität oder Helligkeit der einzelnen Anzeigeelemente 12 zum Ausdruck zu bringen, sind zumindest zwei Anzeigeelemente 12.1 und 12.2 unterschiedlich farblich in den Figuren 1 und 2 dargestellt. Außerdem sind optionale Laufrichtungen 11.1 des Anzeigeverlaufs der Anzeige 11 in den Figuren 1 und 2 dargestellt, wobei jedoch sich die Erfindung nicht auf die dargestellten Laufrichtungen 11.1 beschränken. In der Figur 1 ist die Anzeige um ein Emblem 17 von einem Fahrzeug 100 angeordnet, welches im Wesentlichen kreisförmig ausgestaltet sein kann. Auch ist es denkbar, dass die Anzeige 11 bzw. das erfindungsgemäße System 10 um oder in dem Emblem 17 integriert ist. Zusätzlich kann der in Figur 1 eingezeichnete Helligkeitssensor 21 vorgesehen sein, der dazu dient, die Helligkeit der Anzeige 11 in Abhängigkeit von der Umgebungshelligkeit anzusteuern. Des Weiteren kann auch ein angeordneter Kühlkörper 22 hinter der kreisförmigen Anzeige 12 angeordnet sein, um eine Kühlung zu bewirken.

Zweckmäßigerweise weist das erfindungsgemäße System 10 auch zumindest ein erstes Startelement 15 sowie ein zweites Startelement 16 auf. Die beiden Startelemente 15 und 16 können als Sensorelement, Schalter, Taster, Timer oder Logikbausteine ausgestaltet sein, insbesondere kann das Sensorelement 16, 17 als Näherungssensor, z. B. in Form eines kapazitiven Sensorelements oder optischen Sensors, vorhanden sein.

Damit die Anzeige 12 gegen äußere Umwelteinflüsse optimal geschützt ist, kann ein wasserdichtes Gehäuse 13 vorhanden sein, in der sie eingebettet ist. Das Gehäuse selber kann über Befestigungselement 13.1 am Fahrzeug 100 befestigt werden.

In der Figur 3 ist beispielhaft das Fahrzeug 100 dargestellt. Hierbei kommt ein modularer Aufbau des erfindungsgemäßen Systems 10 zum Einsatz, da eine Steuereinheit 14 baulich getrennt von der Anzeige 11 sowie baulich getrennt von einem zweiten Startelement 16 im Heckbereich des Fahrzeugs 100 angeordnet ist. Das Startelement 16 ist als zweites Sensorelement ausgestaltet und kann z. B. eine Kickbewegung eines Fußes eines Bedieners im Messbereich 16.1 messtechnisch erfassen.

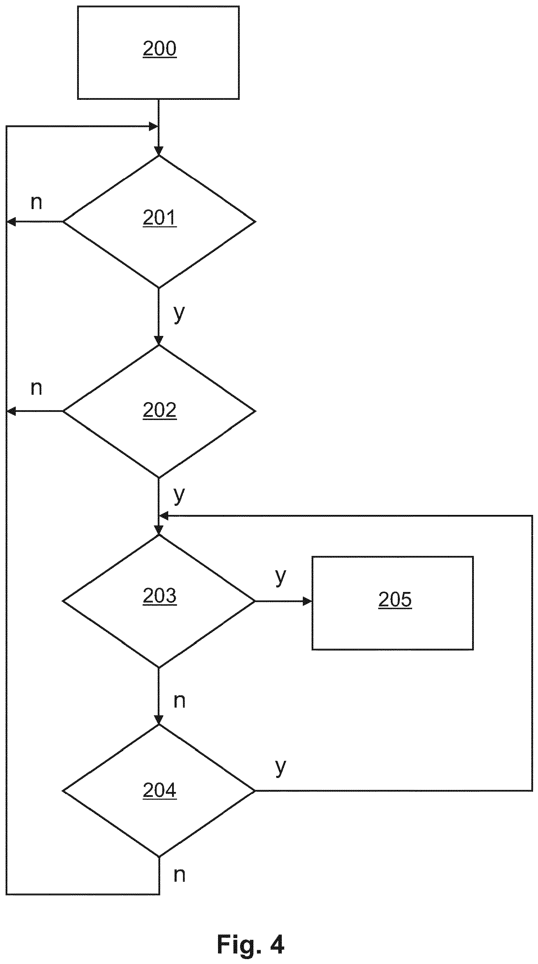

In der Figur 4 ist ein Ablaufdiagramm des erfindungsgemäßen Verfahrens dargestellt. Die einzelnen Schritte 200 bis 205 sind explizit in der Bezugszeichenliste aufgeführt.

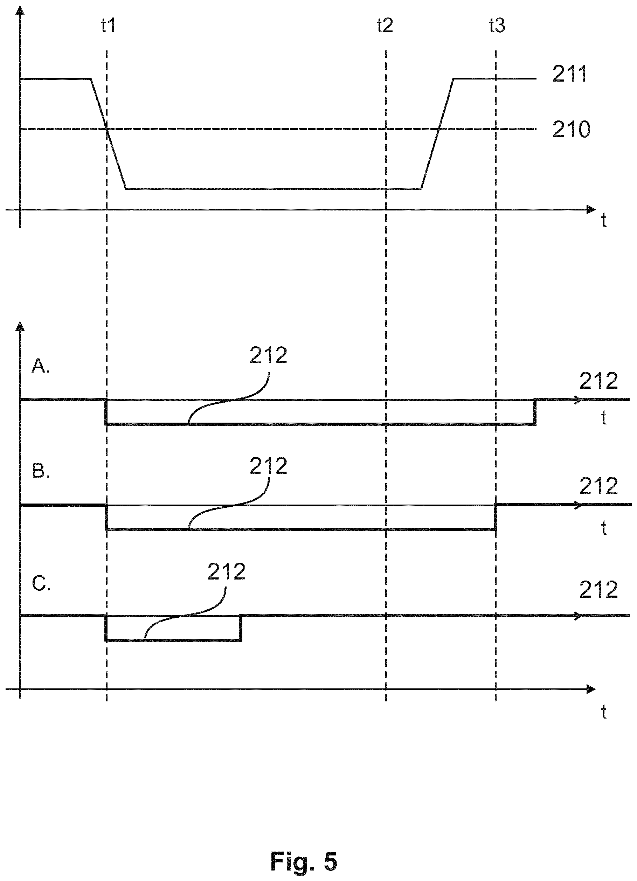

In der Figur 5 ist ein Zeitverlauf des Ablaufdiagramms für die Fälle A. bis C. dargestellt. Im Fall A. wurde die Gestik vom Sensorelement richtig erkannt. Folglich wird das Ausgangssignal ab dem Zeitpunkt t1 (genau genommen ab dem Erreichen des Schwellwertes 210) eingeschaltet (Lichtband läuft auf) und das Ausgangssignal 212 bleibt zeitgesteuert über den Zeitpunkt t3 hinaus aktiv (z. B. zwei Sekunden).

Im Fall B. ist die bedienergeführte Gestik zu lang ausgeführt, woraufhin das Ausgangssignal zum Zeitpunkt t3 zurück gesetzt wird (Lichtband läuft wieder zu).

Im Fall C. ist die bedienergeführte Gestik, die der virtuellen Bedienung des Benutzers zur Auslösung der fahrzeugseitigen Funktion entspricht zu kurz ausgeführt, woraufhin das Ausgangssignal 212 sofort abfällt (Lichtband läuft wieder zu). In dem obersten Koordinatensystem aus Figur 5 ist das Messsignal 211, vom z. B. ersten oder zweiten Startelement 15, 16 über die Zeit im Vergleich zu einem Schwellwert 210 dargestellt, wobei z. B. das Unter- oder Überschreiten des Schwellwertes 210 durch das Meßsignal 211 zur Auslösung des Ausgangssignals 212 führt.

### Bezugszeichenliste

- 10: System
- 11: Anzeige
- 11.1: Laufrichtung von 12
- 12: Anzeigeelement
- 12.1: bspw. rotes Anzeigeelement
- 12.2: bspw. grünes Anzeigeelement
- 13: Gehäuse
- 13.1: Befestigungselemente
- 14: Steuereinheit
- 15: Startelement, erste / bspw. Timer
- 16: Startelement, zweites / Sensorelement
- 16.1: Messbereich
- 17: Emblem
- 18: Lautsprecher
- 19: Antenne
- 20: ID Geber
- 21: Helligkeitssensor
- 22: Kühlkörper

- 100: Fahrzeug
- 101: Heckklappe
- 102: Bremslicht
- 103: Stoßfänger

- 200: Einschalten des Systems
- 201: Abfrage Messsignal < Schwellwert
- 202: Abfrage Zeit t > Zeit t₁ₘᵢₙ
- 203: Abfrage Messsignal > Schwellwert
- 204: Abfrage Zeit t > Zeit t₂ₘₐₓ
- 205: fahrzeugseitige Funktion auslösen, bspw. Heckklappe öffnen
- 210: Schwellwert
- 211: Messsignal
- 212: Ausgangssignal

## Patentansprüche

1. System (10) zum Anzeigen einer Funktion bei einem Kraftfahrzeug (100), mit
zumindest einer Anzeige (11), die mehrere ansteuerbare Anzeigeelemente (12) aufweist, und
einer Steuereinheit (14), die zur Ansteuerung der Anzeige (11) dient, und
einem Startelement (15, 16), womit zumindest eine Ansteuerung der Anzeige startbar ist,
wobei die Steuereinheit (14) zumindest einen Verfahrensablauf zur Ansteuerung der Anzeige (11) aufweist, wobei der Verfahrensablauf durch das Startelement (14) startbar ist,
**dadurch gekennzeichnet,**
**dass** die Anzeige (11) einem Benutzer des Systems (10) zumindest eine Zeitinformation durch einen Anzeigeverlauf sichtbar macht, um die Handhabung des Systems (10) durch eine bewusste Bedienhandlung zu erleichtern.

2. System (10) nach Anspruch 1,
**dadurch gekennzeichnet,**
**dass** das System (10) einen modularen Aufbau aufweist, wobei die Anzeige (11) zumindest ein Modul bildet.

3. System (10) nach Anspruch 1 oder 2,
**dadurch gekennzeichnet,**
**dass** zumindest die Anzeige (11) in einem geschützten Gehäuse (13) angeordnet ist, wobei insbesondere das Gehäuse (13) Befestigungselemente (13.1) aufweist, um zumindest die Anzeige (11) am Kraftfahrzeug (100), insbesondere außenseitig, zu befestigen.

4. System (10) nach einem der vorherigen Ansprüche,
**dadurch gekennzeichnet,**
**dass** die Anzeige (11) zumindest geometrisch als Leuchtband, Leuchtpfeil, Leuchtpunkt, Leuchtring oder Leuchtumrandung ausgestaltet ist, wobei insbesondere die Anzeige (11) durch die geometrische Anordnung der Anzeigeelemente (12) gebildet ist und/oder dass die Anzeige (11) in oder um ein Emblem (17) des Kraftfahrzeuges (100) angeordnet ist und/oder dass die Anzeige (11) mit einem Kühlkörper (22) versehen ist und/oder dass die Anzeige (11) als Bremslicht (102) ausgestaltet ist.

5. System (10) nach einem der vorherigen Ansprüche,
**dadurch gekennzeichnet,**
**dass** die Anzeigeelemente (12) zumindest Licht unterschiedlicher Farbfrequenzen, Intensität oder Helligkeit ausstrahlen, wobei insbesondere ein Anzeigeelement (12) zumindest Licht unterschiedlicher Farbfrequenzen, Intensität oder Helligkeit ausstrahlt.

6. System (10) nach einem der vorherigen Ansprüche,
**dadurch gekennzeichnet,**
**dass** zumindest zwei benachbarte Anzeigeelemente (12) quasi spielfrei nebeneinander angeordnet sind und/oder
**dass** die Anzeige (11) als, insbesondere farbiges Display ausgestaltet ist und/oder dass die Anzeigeelemente (12) als insbesondere mehrfarbige LEDs oder OLEDs ausgestaltet sind.

7. System (10) nach einem der vorherigen Ansprüche,
**dadurch gekennzeichnet,**
**dass** wenigstens ein Timer vorgesehen ist, um zumindest den Verfahrensablauf zeitlich zu steuern.

8. System (10) nach einem der vorherigen Ansprüche,
**dadurch gekennzeichnet,**
**dass** durch den Verfahrensablauf ein insbesondere dynamischer Anzeigeverlauf der Anzeige (11) gesteuert wird.

9. System (10) nach einem der vorherigen Ansprüche,
**dadurch gekennzeichnet,**
**dass** das Startelement (15, 16) zumindest als Sensorelement, Schalter, Taster, Timer oder Logikbaustein ausgestaltet ist.

10. System (10) nach einem der vorherigen Ansprüche,
**dadurch gekennzeichnet,**
**dass** zumindest ein Näherungssensor als Startelement (15, 16), insbesondere in Form eines kapazitiven Sensors oder eines optischen Sensors, vorhanden ist.

11. System (10) nach einem der vorherigen Ansprüche,
**dadurch gekennzeichnet,**
**dass** zumindest ein zweites Startelement (15, 16) als Sensorelement vorhanden ist, um eine fahrzeugseitige Funktion auszulösen.

12. System (10) nach einem der vorherigen Ansprüche,
**dadurch gekennzeichnet,**
**dass** eine Antenne (19) für eine Kommunikation mit einem externen ID-Geber (20) vorhanden ist und/oder ein Lautsprecher (18) für wenigstens ein akustisches Signal.

13. System (10) nach einem der vorherigen Ansprüche,
**dadurch gekennzeichnet,**
**dass** ein Helligkeitssensor (21) vorhanden ist, wodurch die Helligkeit der Anzeige (11) durch die Steuereinheit (14) anpassbar ist.

14. Verfahren zum Anzeigen einer Funktion bei einem Kraftfahrzeug (100),
durch ein System (10) nach einem der Ansprüche 1 bis 13 mit
zumindest einer Anzeige (11), die mehrere ansteuerbare Anzeigeelemente (12) aufweist, und
einer Steuereinheit (14), die zur Ansteuerung der Anzeige (11) dient, und
einem Startelement (15, 16), womit zumindest eine Ansteuerung der Anzeige (11) gestartet werden kann,
**dadurch gekennzeichnet,**
**dass** die Steuereinheit (14) zumindest einen Verfahrensablauf zur Ansteuerung der Anzeige (11) aufweist, wobei
a) der Verfahrensablauf durch das Startelement (15, 16) gestartet wird und
b) die Anzeigeelemente (12) durch die Steuereinheit (14) gemäß des Verfahrensablaufs angesteuert werden.

15. Verfahren nach Anspruch 14,
**dadurch gekennzeichnet,**
**dass** die Anzeige (11) einen dynamischen Anzeigeverlauf darstellt und/oder
**dass** ein situationsabhängiger Verfahrensablauf, der insbesondere von eingehenden Sensorsignalen beeinflusst wird, durch die Steuereinheit (14) realisiert wird.

## Claims

1. System (10) for displaying a function at a motor vehicle (100), comprising
at least one display (11) which comprises a plurality of controllable display elements (12), and
a control unit (14), which serves to control the display (11), and
a start element (15, 16), with which at least one control of the display can be started,
wherein the control unit (14) comprises at least one process sequence for controlling the display (11), wherein the process sequence can be started by the start element (14),
**characterized in that**
the display (11) visualizes at least one time information to a user of the system (10) by means of a display sequence in order to simplify the handling of the system (10) by means of a conscious operating action.

2. System (10) according to claim 1,
**characterized in that**
the system (10) comprises a modular structure, wherein the display (11) forms at least one module.

3. System (10) according to claim 1 or 2,
**characterized in that**
at least the display (11) is arranged in a protected housing (13), wherein the housing (13) in particular comprises fixing elements (13.1) in order to fix at least the display (11) to the motor vehicle (100), in particular on the outside.

4. System (10) according to one of the previous claims,
**characterized in that**
the display (11) is designed at least geometrically as a luminous band, a luminous arrow, a luminous dot, a luminous ring or a luminous border, wherein the display (11) is in particular formed by the geometrical arrangement of the display elements (12) and/or
the display (11) is arranged in or around an emblem (17) of the motor vehicle (100) and/or the display (11) is provided with a heat sink (22) and/or
the display (11) is designed as a brake light (102).

5. System (10) according to one of the previous claims,
**characterized in that**
the display elements (12) at least emit light of different color frequencies, intensity or brightness, wherein in particular one display element (12) at least emits light of different color frequencies, intensity or brightness.

6. System (10) according to one of the previous claims,
**characterized in that**
at least two adjacent display elements (12) are arranged next to one another with virtually no clearance and/or
the display (11) is designed as a, in particular colored display, and/or
the display elements (12) are designed in particular as multicoloured LEDs or OLEDs.

7. System (10) according to one of the previous claims,
**characterized in that**
at least one timer is provided to control at least the process sequence over time.

8. System (10) according to one of the previous claims,
**characterized in that**
the process sequence controls a, in particular dynamic, display sequence of the display (11).

9. System (10) according to one of the previous claims,
**characterized in that**
the start element (15, 16) is designed at least as a sensor element, a switch, a push button, a timer or a logic module.

10. System (10) according to one of the previous claims,
**characterized in that**
at least one proximity sensor is present as a starting element (15, 16), in particular in the form of a capacitive sensor or an optical sensor.

11. System (10) according to one of the previous claims,
**characterized in that**
at least one second starting element (15, 16) is present as a sensor element in order to trigger a vehicle-side function.

12. System (10) according to one of the previous claims,
**characterized in that**
an antenna (19) is provided for a communication with an external ID transmitter (20) and/or a loudspeaker (18) is provided for at least one acoustic signal.

13. System (10) according to one of the previous claims,
**characterized in that**
a brightness sensor (21) is present, whereby the brightness of the display (11) can be adjusted by the control unit (14).

14. Method for displaying a function at a motor vehicle (100),
by a system (10) according to one of claims 1 to 13 comprising
at least one display (11) which comprises a plurality of controllable display elements (12),
and
a control unit (14), which serves to control the display (11), and
a start element (15, 16), with which at least one control of the display (11) can be started,
**characterized in that**
the control unit (14) comprises at least one process sequence for controlling the display (11), wherein
a) the process sequence is started by the start element (15, 16) and
b) the display elements (12) are controlled by the control unit (14) according to the process sequence.

15. Method according to claim 14,
**characterized in that**
the display (11) represents a dynamic display sequence and/or
a situation-dependent process sequence, which is influenced in particular by incoming sensor signals, is realized by the control unit (14).

## Revendications

1. Système (10) d'affichage d'une fonction dans un véhicule automobile (100), comprenant au moins un affichage (11), qui comprend plusieurs éléments d'affichage contrôlables (12), et
une unité de contrôle (14) qui sert à contrôler l'affichage (11), et
un élément de démarrage (15, 16), avec lequel au moins un contrôle de l'affichage peut être lancée,
dans lequel l'unité de contrôle (14) comprend au moins une séquence de processus pour le contrôle de l'affichage (11), la séquence de processus pouvant être lancée par l'élément de démarrage (14),
**caractérisé en ce que**
l'affichage (11) rend au moins une information temporelle visible à un utilisateur du système (10) au moyen d'une séquence d'affichage, afin de faciliter la manipulation du système (10) par une action de contrôle consciente.

2. Système (10) selon la revendication 1,
**caractérisé en ce que**
le système (10) a une structure modulaire, l'affichage (11) formant au moins un module.

3. Système (10) selon la revendication 1 ou 2,
**caractérisé en ce qu'**
au moins l'affichage (11) est disposé dans un boîtier protégé (13), le boîtier (13) présentant en particulier des éléments de fixation (13.1) pour fixer au moins l'affichage (11) sur le véhicule automobile (100), en particulier à l'extérieur.

4. Système (10) selon l'une des revendications précédentes,
**caractérisé en ce que**
l'affichage (11) est conçu au moins géométriquement comme une bande lumineuse, une flèche lumineuse, un point lumineux, un anneau lumineux ou une bordure lumineuse, l'affichage (11) étant en particulier formé par la disposition géométrique des éléments d'affichage (12) et/ou
l'affichage (11) est disposé dans ou autour d'un emblème (17) du véhicule automobile (100) et/ou l'affichage (11) est muni d'un dissipateur thermique (22) et/ou
l'affichage (11) est conçu comme un feu de stop (102).

5. Système (10) selon l'une des revendications précédentes,
**caractérisé en ce que**
les éléments d'affichage (12) émettent au moins de la lumière de différentes fréquences de couleur, d'intensité ou de luminosité, en particulier un élément d'affichage (12) émettant au moins de la lumière de différentes fréquences de couleur, d'intensité ou de luminosité.

6. Système (10) selon l'une des revendications précédentes,
**caractérisé en ce qu'**
au moins deux éléments d'affichage (12) adjacents sont disposés l'un à côté de l'autre sans pratiquement aucun jeu et/ou
l'affichage (11) est conçu comme un affichage, en particulier en couleur, et/ou
les éléments d'affichage (12) sont en particulier conçus comme des LED multicolores ou des OLED.

7. Système (10) selon l'une des revendications précédentes,
**caractérisé en ce que**
au moins une minuterie est prévue afin de contrôler au moins la séquence de processus en termes de temps.

8. Système (10) selon l'une des revendications précédentes,
**caractérisé en ce que**
la séquence de processus contrôle une séquence d'affichage (11) particulièrement dynamique.

9. Système (10) selon l'une des revendications précédentes,
**caractérisé en ce que**
l'élément de démarrage (15, 16) est conçu au moins comme un élément capteur, un interrupteur, un bouton poussoir, une minuterie ou un module logique.

10. Système (10) selon l'une des revendications précédentes,
**caractérisé en ce qu'**
au moins un capteur de proximité est présent comme élément de démarrage (15, 16), en particulier sous la forme d'un capteur capacitif ou d'un capteur optique.

11. Système (10) selon l'une des revendications précédentes,
**caractérisé en ce qu'**
au moins un deuxième élément de démarrage (15, 16) est présent comme élément capteur afin de déclencher une fonction du côté du véhicule.

12. Système (10) selon l'une des revendications précédentes,
**caractérisé en ce qu'**
une antenne (19) est prévue pour la communication avec un émetteur ID externe (20) et/ou un haut-parleur (18) est prévu pour au moins un signal acoustique.

13. Système (10) selon l'une des revendications précédentes,
**caractérisé en ce qu'**
un capteur de luminosité (21) est présent, la luminosité de l'affichage (11) pouvant être réglée par l'unité de contrôle (14).

14. Méthode d'affichage d'une fonction dans un véhicule automobile (100),
par un système (10) selon l'une des revendications 1 à 13 comprenant
au moins un affichage (11), qui comprend plusieurs éléments d'affichage contrôlables (12),
et
une unité de contrôle (14) qui sert à contrôler l'affichage (11), et
un élément de démarrage (15, 16) avec lequel au moins un contrôle de l'affichage (11) peut être lancée,
**caractérisé en ce que**
l'unité de contrôle (14) comprend au moins une séquence de processus pour le contrôle de l'affichage (11), où
a) la séquence de processus est lancée par l'élément de démarrage (15, 16) et
b) les éléments d'affichage (12) sont contrôlés par l'unité de contrôle (14) en fonction de la séquence du processus.

15. Méthode selon la revendication 14,
**caractérisé en ce que**
l'affichage (11) représente une séquence d'affichage dynamique et/ou
une séquence de processus dépendant de la situation, qui est en particulier influencée par les signaux des capteurs entrants, est mise en oeuvre par l'unité de contrôle (14).
